# EUROPEAN PATENT APPLICATION

(11) **EP 4 542 096 A1**
(43) Date of publication of application: **23.04.2025**
(21) Application number: 23823474.4
(22) Date of filing: 17.03.2023
(51) Int. Cl.: F16L 15/04, C25D 5/12, C25D 5/48, C25D 7/00

(54) **METAL PIPE FOR OIL WELL**

(30) Priority: 15.06.2022 JP 2022096789
(71) Applicant: Nippon Steel Corporation, Tokyo 100-8071 (JP); Vallourec Oil and Gas France, 59620 Aulnoye-Aymeries (FR)
(72) Inventor: OSHIMA, Masahiro, Tokyo 100-8071 (JP)
(74) Representative: J A Kemp LLP
(86) International application number: PCT/JP2023/010725
(87) International publication number: WO 2023/243170

(57) **Abstract**

Provided is an oil-well metal pipe including a Zn-Ni alloy plating layer that has excellent galling resistance. An oil-well metal pipe (1) according to the present disclosure includes a pipe main body (10) including a first end portion (10A) and a second end portion (10B). The pipe main body (10) includes a pin (40) formed at the first end portion (10A), and a box (50) formed at the second end portion (10B). The pin (40) includes a pin contact surface (400) including an external thread part (41). The box (50) includes a box contact surface (500) including an internal thread part (51). The oil-well metal pipe (1) further includes a Ni plating layer (100) formed on at least one of the pin contact surface (400) and the box contact surface (500), and a Zn-Ni alloy plating layer (110) formed on the Ni plating layer (100). The deposition amount of the Ni plating layer (100) is 6.00 g/m² or more.

## Description

### TECHNICAL FIELD

The present disclosure relates to a metal pipe, and more particularly to an oil-well metal pipe.

### BACKGROUND ART

Oil-well metal pipes are used in oil wells and gas wells (hereinafter, oil wells and gas wells are collectively referred to simply as "oil wells"). An oil-well metal pipe has a threaded connection. Specifically, at an oil-well drilling site, a plurality of oil-well metal pipes are connected to form an oil country tubular goods connected body, which is typified by a casing pipe and a tubing pipe, depending on the depth of the oil well. The oil country tubular goods connected body is formed by fastening oil-well metal pipes to each other. Moreover, the oil country tubular goods connected body may be subjected to inspection. When inspection is performed, the oil country tubular goods connected body is lifted up and loosened. Then, the oil-well metal pipes are detached from the oil country tubular goods connected body by loosening and are inspected. After the inspection, the oil-well metal pipes are refastened to each other again so that the oil-well metal pipes are reused as a part of the oil country tubular goods connected body.

An oil-well metal pipe includes a pin and a box. The pin has a pin contact surface, which includes an external thread part, on an outer peripheral surface of an end portion of the oil-well metal pipe. The box has a box contact surface, which includes an internal thread part, on an inner peripheral surface of an end portion of the oil-well metal pipe. In the present description, the external thread part and the internal thread part are also collectively referred to as "thread parts". In addition, in the present description, the pin contact surface and the box contact surface are also collectively referred to as "contact surface". Note that the pin contact surface may further include a pin unthread metal contact portion, which includes a pin sealing surface and a pin shoulder surface. Likewise, the box contact surface may further include a box unthread metal contact portion, which includes a box sealing surface and a box shoulder surface.

The pin contact surface and the box contact surface (contact surface) of the oil-well metal pipe repeatedly experience strong friction during fastening and loosening. For that reason, in the pin contact surface and the box contact surface, galling (unrepairable galling) is liable to occur when the fastening and loosening are repeated. Therefore, the oil-well metal pipe is required to have sufficient durability against friction, that is, to have excellent galling resistance.

In an oil-well metal pipe disclosed in Patent Literature 1 (International Application Publication No. 2016/170031), a Zn-Ni alloy plating layer is formed on a pin contact surface or a box contact surface in place of a compound grease. The Zn contained in the Zn-Ni alloy plating layer formed on a contact surface of the oil-well metal pipe enhances the corrosion resistance of the oil-well metal pipe by sacrificial protection. In addition, it is described in Patent Literature 1 that the Zn-Ni alloy is also excellent in a wear resistance characteristic.

### CITATION LIST

### PATENT LITERATURE

Patent Literature 1: International Application Publication No. 2016/170031
Patent Literature 2: Japanese Patent Application Publication No. 2014-91244
Patent Literature 3: Japanese Patent Application Publication No. 2017-179510

### SUMMARY OF INVENTION

### TECHNICAL PROBLEM

In this connection, in recent years there is a demand for an oil-well metal pipe which has more excellent galling resistance. In particular, in a large-sized oil-well metal pipe, because the circumference of the pipe main body is longer, sliding over a longer distance is necessary from the start of fastening until the completion of fastening. Consequently, in a large-sized oil-well metal pipe, there is a tendency for galling to occur more easily than in a conventional oil-well metal pipe. Thus, there has been a need for an oil-well metal pipe which has more excellent galling resistance than the conventional oil-well metal pipes.

It is an objective of the present disclosure to provide an oil-well metal pipe including a Zn-Ni alloy plating layer which has excellent galling resistance.

### SOLUTION TO PROBLEM

An oil-well metal pipe according to the present disclosure includes:
a pipe main body including a first end portion and a second end portion,
the pipe main body including:
   a pin formed at the first end portion, and
   a box formed at the second end portion;
   wherein:
      the pin includes a pin contact surface including an external thread part; and
      the box includes a box contact surface including an internal thread part;
      the oil-well metal pipe further including:
         a Ni plating layer formed on at least one of the pin contact surface and the box contact surface, and
         a Zn-Ni alloy plating layer formed on the Ni plating layer;
         wherein:
            a deposition amount of the Ni plating layer is 6.00 g/m² or more.

### ADVANTAGEOUS EFFECT OF INVENTION

The oil-well metal pipe including a Zn-Ni alloy plating layer according to the present disclosure has excellent galling resistance.

### BRIEF DESCRIPTION OF DRAWINGS

[FIG. 1] FIG. 1 is a graph illustrating the relation between a deposition amount (g/m²) of a Ni plating layer and a sliding distance (mm) that is an index of galling resistance, in examples to be described later.
[FIG. 2] FIG. 2 is a configuration diagram illustrating one example of an oil-well metal pipe according to the present embodiment.
[FIG. 3] FIG. 3 is a partial cross-sectional view to illustrate a cross section (longitudinal cross section) parallel to the pipe axial direction, of a coupling of the oil-well metal pipe illustrated in FIG. 2.
[FIG. 4] FIG. 4 is a cross-sectional view, which is parallel to the pipe axis direction of the oil-well metal pipe, of a portion in the vicinity of a pin of the oil-well metal pipe illustrated in FIG. 3.
[FIG. 5] FIG. 5 is a cross-sectional view, which is parallel to the pipe axis direction of the oil-well metal pipe, of a portion in the vicinity of a box of the oil-well metal pipe illustrated in FIG. 3.
[FIG. 6] FIG. 6 is a view illustrating one example of an oil-well metal pipe in which the pin includes an external thread part but does not include a pin sealing surface and a pin shoulder surface, and the box includes an internal thread part but does not include a box sealing surface and a box shoulder surface.
[FIG. 7] FIG. 7 is a configuration diagram illustrating an integral type oil-well metal pipe according to the present embodiment.
[FIG. 8] FIG. 8 is a cross-sectional view of the vicinity of a pin contact surface in a case where a Ni plating layer is formed on the pin contact surface.
[FIG. 9] FIG. 9 is a cross-sectional view of the vicinity of a box contact surface in a case where a Ni plating layer is formed on the box contact surface.
[FIG. 10] FIG. 10 is a cross-sectional view of the vicinity of the pin contact surface of a configuration different from that of FIG. 8.
[FIG. 11] FIG. 11 is a cross-sectional view of the vicinity of the box contact surface of a configuration different from that of FIG. 9.

### DESCRIPTION OF EMBODIMENTS

Hereinafter, referring to the drawings, the present embodiment will be described in detail. The like or corresponding parts are given like symbols throughout the drawings, and the description thereof will not be repeated.

A Zn-Ni alloy plating layer has excellent wear resistance because of the high hardness thereof. Further, in a case where a plating layer has excellent wear resistance, there is a tendency for excellent galling resistance to be obtained. Therefore, a Zn-Ni alloy plating layer has been applied in oil-well metal pipes in which galling resistance is required. On the other hand, as mentioned above, in a large-sized oil-well metal pipe which has a large diameter, the sliding distance during fastening and loosening is longer than in the case of conventional oil-well metal pipes. Therefore, even amongst oil-well metal pipes which have a Zn-Ni alloy plating layer, in the case of large-sized oil-well metal pipes, excellent galling resistance is not obtained in some cases. Therefore, the present inventors investigated various techniques for increasing the galling resistance of an oil-well metal pipe which has a Zn-Ni alloy plating layer. As a result, the present inventors obtained the following findings.

Because a Zn-Ni alloy plating layer has high hardness, the ductility of a Zn-Ni alloy plating layer is low compared to other plating layers, such as a Cu plating layer. Further, because oil-well metal pipes are used in hostile environments, in an oil-well metal pipe a Zn-Ni alloy plating layer is formed to have a thicker thickness than in the case of a plated steel plate or the like. Therefore, the internal stress of a Zn-Ni alloy plating layer formed in an oil-well metal pipe is liable to be high. The present inventors considered that, as a result, in an oil-well metal pipe the adhesiveness between the Zn-Ni alloy plating layer and the contact surface is liable to decrease, and the galling resistance is liable to decrease. That is, if the adhesiveness between the Zn-Ni alloy plating layer and the contact surface can be increased, there is a possibility that the galling resistance of the oil-well metal pipe will be enhanced.

Up to now, a metal strike plating layer has been used for the purpose of increasing adhesiveness between a steel material and a plating layer. Patent Literature 2 (Japanese Patent Application Publication No. 2014-91244) discloses technology pertaining to a resin-coated metal plate for a container in which a metal strike plating layer is formed. Specifically, in Patent Literature 2 it is stated that "Until now, metal strike plating has been carried out for the primary objective of improving adhesiveness between a base metal and a plating layer" (paragraph [0023] of Patent Literature 2), and that "As the type of metal strike plating, nickel plating or copper plating is suitable because these are already established as practical techniques" (paragraph [0025] of Patent Literature 2). On the other hand, in Patent Literature 2 it is stated that "if the deposition amount is less than 0.1 g/m², it will be difficult to form a uniform plating layer, and good plating adhesiveness cannot be obtained", and that "since a metal strike plating layer is formed with a plating bath in which the cathodic precipitation efficiency is low, if the film thickness becomes more than 3.0 g/m², angular electro-deposits on the metal strike plating surface will coarsen" (both of these statements appear in paragraph [0026] of Patent Literature 2). Patent Literature 2 states to the effect that for this reason the plating deposition amount of a metal strike plating layer is set in the range of 0.1 to 3.0 g/m².

Similarly, a technique that forms a Ni plating layer between a steel material and a plating layer has been used to increase the adhesiveness between the steel material and the plating layer. Patent Literature 3 (Japanese Patent Application Publication No. 2017-179510) discloses a technique that forms a Ni plating layer to increase the adhesiveness of a Cu plating layer. Specifically, in Patent Literature 3 it is stated that "From the viewpoint of improving the adhesiveness between a stainless steel plate and a Cu plating layer, the deposition amount of a Ni plating layer is preferably 0.4 g/m² or more", and also that "From the viewpoint of improving the adhesiveness between the stainless steel plate and the Cu plating layer, preferably the deposition amount is 4 g/m² or less" (both of these statements appear in paragraph [0017] of Patent Literature 3). That is, Patent Literature 3 states to the effect that by forming a Ni plating layer between a steel material and a Cu plating layer, the adhesiveness of the Cu plating layer to the steel material is increased, however if the Ni plating layer is too thick, the adhesiveness of the Cu plating layer to the steel material will, on the contrary, be reduced.

Referring to these disclosures of the prior art, there is a possibility that if a thin Ni plating layer is formed between a contact surface of an oil-well metal pipe and a Zn-Ni alloy plating layer, the adhesiveness of the Zn-Ni alloy plating layer will increase and the galling resistance of the oil-well metal pipe will be enhanced. Therefore, the present inventors produced various oil-well metal pipes having a Ni plating layer formed on a contact surface, and a Zn-Ni alloy plating layer formed on the Ni plating layer, and evaluated the galling resistance of the oil-well metal pipes. As a result, contrary to what was expected based on the prior art, it has been revealed that if the deposition amount of the Ni plating layer is increased to 6.00 g/m² or more, the galling resistance of the oil-well metal pipe markedly increases. This point is described in detail hereunder using the drawings.

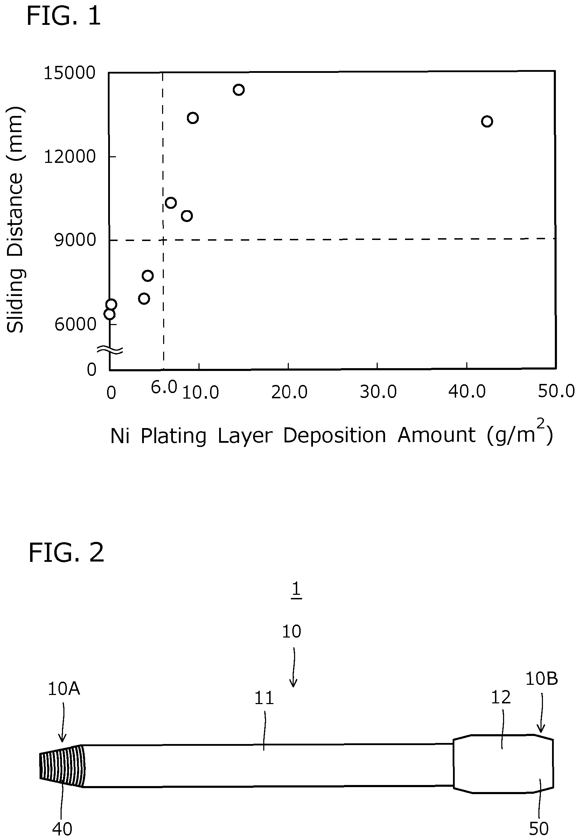

FIG. 1 is a graph illustrating the relation between a deposition amount (g/m²) of a Ni plating layer and a sliding distance (mm) that is an index of galling resistance, in examples to be described later. FIG. 1 was created using deposition amounts (g/m²) of Ni plating layers formed on steel plates simulating a contact surface, and sliding distances (mm) in a slidability evaluation test in examples to be described later.

Referring to FIG. 1, it is shown that when the deposition amount of the Ni plating layer was less than 6.00 g/m², the sliding distance was almost the same level as in a case where a Ni plating layer was not formed. That is, even when a thin Ni plating layer disclosed in the prior art was formed, there was no substantial change in the galling resistance of an oil-well metal pipe in which a Zn-Ni alloy plating layer was formed. On the other hand, when the deposition amount of the Ni plating layer was 6.00 g/m² or more, the sliding distance was significantly longer compared to the cases where a thin Ni plating layer was formed. That is, it has been revealed that when the thin Ni plating layer which has been used from the viewpoint of adhesiveness up to now is purposely formed to have a thick thickness, the galling resistance of the oil-well metal pipe is markedly enhanced.

Note that, the reason why the galling resistance of an oil-well metal pipe in which a Zn-Ni alloy plating layer is formed is enhanced by increasing the deposition amount of a Ni plating layer formed on a contact surface to 6.00 g/m² or more has not been clarified in detail. However, the present inventors infer as follows. As described above, when a Zn-Ni alloy plating layer formed in an oil-well metal pipe is thickly formed, the internal stress thereof is liable to become high. That is, in the oil-well metal pipe, the influence of internal stress of the formed Zn-Ni alloy plating layer is easily actualized. On the other hand, by thickly forming a Ni plating layer, a distance can be created between the contact surface and the Zn-Ni alloy plating layer, and there is a possibility that the internal stress of the Zn-Ni alloy plating layer can be dispersed. Therefore, there is a possibility that the effect of dispersing the internal stress of the Zn-Ni alloy plating layer produced by the thick Ni plating layer surpasses the effect of a decrease in adhesiveness caused by forming the thick Ni plating layer, and as a result the galling resistance of the oil-well metal pipe increases.

The present inventors surmise that, due to the above mechanism, the galling resistance of an oil-well metal pipe in which a Zn-Ni alloy plating layer is formed is enhanced by increasing the deposition amount of a Ni plating layer formed on a contact surface to 6.00 g/m² or more. Note that there is also a possibility that the galling resistance of an oil-well metal pipe in which a Zn-Ni alloy plating layer is formed is enhanced by increasing the deposition amount of a Ni plating layer formed on a contact surface to 6.00 g/m² or more because of a mechanism that is different to the mechanism described above. However, it has been proved by examples described below that the galling resistance of an oil-well metal pipe in which a Zn-Ni alloy plating layer is formed is enhanced by increasing the deposition amount of a Ni plating layer formed on a contact surface to 6.00 g/m² or more.

The gist of the oil-well metal pipe of the present embodiment that has been completed based on the findings described so far is as follows.

[1] An oil-well metal pipe including:
   a pipe main body including a first end portion and a second end portion,
   the pipe main body including:
      a pin formed at the first end portion; and
      a box formed at the second end portion,
      wherein:
         the pin includes a pin contact surface including an external thread part; and
         the box includes a box contact surface including an internal thread part;
         the oil-well metal pipe further including:
            a Ni plating layer formed on at least one of the pin contact surface and the box contact surface, and
            a Zn-Ni alloy plating layer formed on the Ni plating layer;
            wherein:
               a deposition amount of the Ni plating layer is 6.00 g/m² or more.
[2] The oil-well metal pipe according to [1], further including:
   a lubricant coating layer on or above the Zn-Ni alloy plating layer.

Hereinafter, the oil-well metal pipe according to the present embodiment will be described in detail.

### [Structure of oil-well metal pipe]

First, the structure of an oil-well metal pipe of the present embodiment will be described. The oil-well metal pipe has a well-known structure. The available types of oil-well metal pipe are a T&C type oil-well metal pipe and an integral type oil-well metal pipe. Hereinafter, each type of oil-well metal pipe will be described in detail.

### [When oil-well metal pipe 1 is T&C type]

FIG. 2 is a configuration diagram illustrating one example of an oil-well metal pipe 1 according to the present embodiment. FIG. 2 is a configuration diagram of an oil-well metal pipe 1 of a so-called T&C (Threaded and Coupled) type. Referring to FIG. 2, the oil-well metal pipe 1 includes a pipe main body 10.

The pipe main body 10 extends in the pipe axis direction. A cross section perpendicular to the pipe axis direction of the pipe main body 10 is of a circular shape. The pipe main body 10 includes a first end portion 10A and a second end portion 10B. The first end portion 10A is an end portion on the opposite side to the second end portion 10B. In the T&C type oil-well metal pipe 1 shown in FIG. 2, the pipe main body 10 includes a pin tube body 11 and a coupling 12. The coupling 12 is attached to one end of the pin tube body 11. More specifically, the coupling 12 is fastened by threading to the one end of the pin tube body 11.

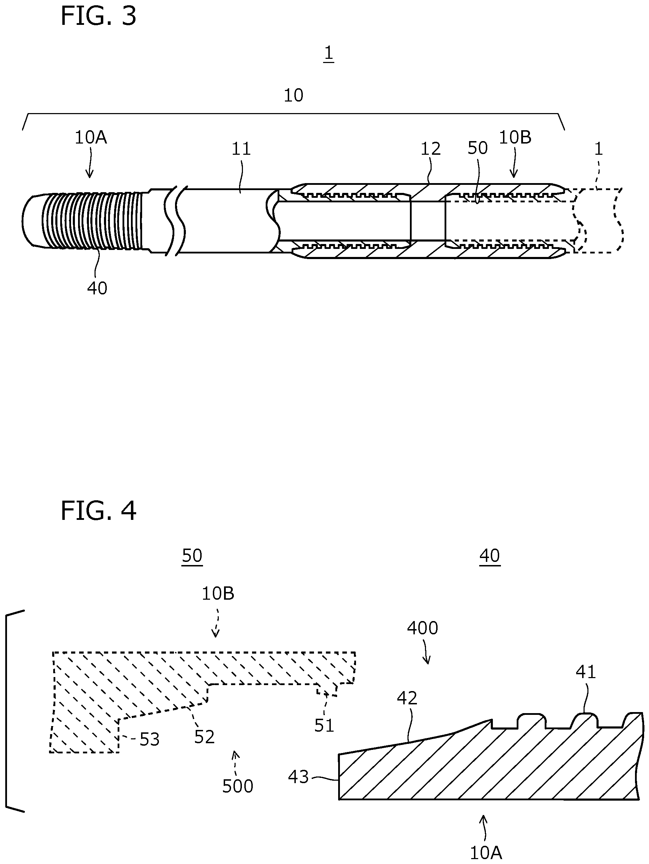

FIG. 3 is a partial cross-sectional view to illustrate a cross section (longitudinal cross section) parallel to the pipe axis direction of the coupling 12 of the oil-well metal pipe 1 illustrated in FIG. 2. Referring to FIGS. 2 and 3, the pipe main body 10 includes a pin 40 and a box 50. The pin 40 is formed at the first end portion 10A of the pipe main body 10. At the time of fastening, the pin 40 is inserted into the box 50 of another oil-well metal pipe 1 (not shown) to be fastened by threading to the box 50 of the other oil-well metal pipe 1.

The box 50 is formed at the second end portion 10B of the pipe main body 10. At the time of fastening, a pin 40 of another oil-well metal pipe 1 is inserted into the box 50, and thus the box 50 is fastened by threading to the pin 40 of the other oil-well metal pipe 1.

### [Structure of pin 40]

FIG. 4 is a cross-sectional view, which is parallel to a pipe axis direction of the oil-well metal pipe 1, of a portion in the vicinity of a pin 40 of the oil-well metal pipe 1 illustrated in FIG. 3. A dashed line portion in FIG. 4 represents the structure of the box 50 of another oil-well metal pipe 1 in the case of fastening to the other oil-well metal pipe 1. Referring to FIG. 4, the pin 40 includes a pin contact surface 400 on an outer peripheral surface of the first end portion 10A of the pipe main body 10. At the time of fastening to another oil-well metal pipe 1, the pin contact surface 400 is screwed into the box 50 of the other oil-well metal pipe 1 to come into contact with the box contact surface 500 (to be described later) of the box 50.

The pin contact surface 400 at least includes an external thread part 41 formed on the outer peripheral surface of the first end portion 10A. The pin contact surface 400 may further include a pin sealing surface 42 and a pin shoulder surface 43. In FIG. 4, the pin shoulder surface 43 is disposed at the front end face of the first end portion 10A, and the pin sealing surface 42 is disposed on the front end side of the first end portion 10A with respect to the external thread part 41 in the outer peripheral surface of the first end portion 10A. That is, the pin sealing surface 42 is disposed between the external thread part 41 and the pin shoulder surface 43. The pin sealing surface 42 is provided in a tapered shape. Specifically, in the pin sealing surface 42, the external diameter thereof gradually decreases from the external thread part 41 toward the pin shoulder surface 43 in the longitudinal direction (pipe axis direction) of the first end portion 10A.

At the time of fastening to another oil-well metal pipe 1, the pin sealing surface 42 comes into contact with the box sealing surface 52 (to be described later) of the box 50 of the other oil-well metal pipe 1. More specifically, at the time of fastening, as a result of the pin 40 being inserted into the box 50 of another oil-well metal pipe 1, the pin sealing surface 42 comes into contact with the box sealing surface 52. Then, as a result of the pin 40 being further screwed into the box 50 of another oil-well metal pipe 1, the pin sealing surface 42 comes into close contact with the box sealing surface 52. As a result, at the time of fastening, the pin sealing surface 42 comes into close contact with the box sealing surface 52, thus forming a seal based on metal-metal contact. For that reason, it is possible to improve gastightness in mutually fastened oil-well metal pipes 1.

In FIG. 4, the pin shoulder surface 43 is disposed at a front end face of the first end portion 10A. That is, in the pin 40 illustrated in FIG. 4, an external thread part 41, a pin sealing surface 42, and a pin shoulder surface 43 are disposed in that order from the center of the pipe main body 10 toward the first end portion 10A. At the time of fastening to another oil-well metal pipe 1, the pin shoulder surface 43 opposes and contacts the box shoulder surface 53 (to be described later) of the box 50 of another oil-well metal pipe 1. More specifically, at the time of fastening, as a result of the pin 40 being inserted into the box 50 of another oil-well metal pipe 1, the pin shoulder surface 43 comes into contact with the box shoulder surface 53. As a result of this, at the time of fastening, it is possible to achieve a high torque. Moreover, it is possible to stabilize the positional relation between the pin 40 and the box 50 in a fastened state.

Note that the pin contact surface 400 of the pin 40 includes at least the external thread part 41. That is, the pin contact surface 400 includes the external thread part 41, and needs not include the pin sealing surface 42 and the pin shoulder surface 43. The pin contact surface 400 includes the external thread part 41 and the pin shoulder surface 43, and needs not include the pin sealing surface 42. The pin contact surface 400 includes the external thread part 41 and the pin sealing surface 42, and needs not include the pin shoulder surface 43.

### [Structure of box 50]

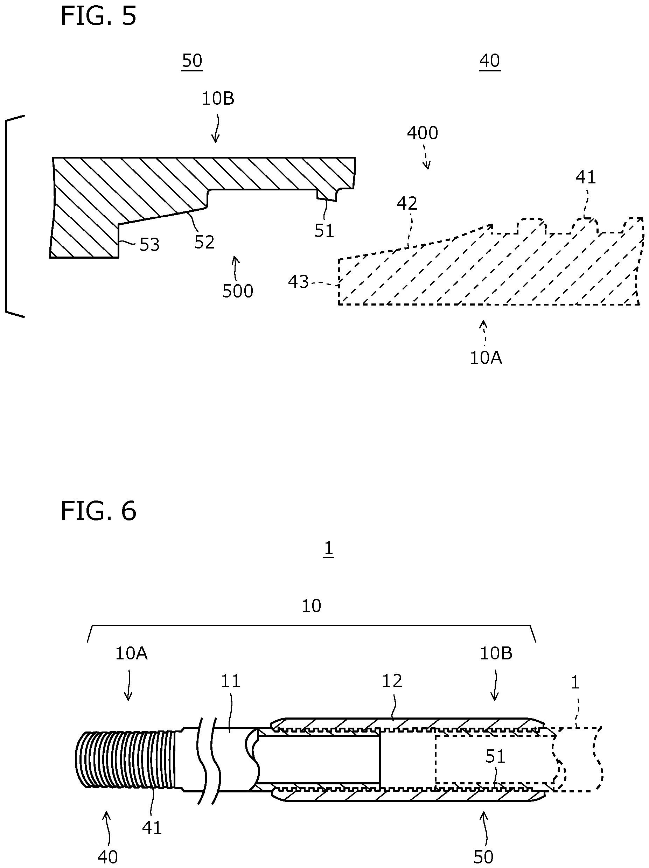

FIG. 5 is a cross-sectional view, which is parallel to the pipe axis direction of the oil-well metal pipe 1, of a portion in the vicinity of a box 50 of the oil-well metal pipe 1 illustrated in FIG. 3. A dashed line portion in FIG. 5 represents the structure of the pin 40 of another oil-well metal pipe 1 in the case of fastening to the other oil-well metal pipe 1. Referring to FIG. 5, the box 50 includes a box contact surface 500 on an inner peripheral surface of the second end portion 10B of the pipe main body 10. At the time of fastening to another oil-well metal pipe 1, the pin 40 of the other oil-well metal pipe 1 is screwed into the box contact surface 500, and the box contact surface 500 comes into contact with the pin contact surface 400 of the pin 40.

The box contact surface 500 includes at least an internal thread part 51 formed in the inner peripheral surface of the second end portion 10B. At the time of fastening, the internal thread part 51 engages with the external thread part 41 of the pin 40 of the other oil-well metal pipe 1.

The box contact surface 500 may further include a box sealing surface 52 and a box shoulder surface 53. In FIG. 5, the box sealing surface 52 is disposed on the pipe main body 10 side with respect to the internal thread part 51, in the inner peripheral surface of the second end portion 10B. That is, the box sealing surface 52 is disposed between the internal thread part 51 and the box shoulder surface 53. The box sealing surface 52 is provided in a tapered shape. Specifically, the internal diameter of the box sealing surface 52 gradually decreases from the internal thread part 51 toward the box shoulder surface 53 in the longitudinal direction (pipe axis direction) of the second end portion 10B.

At the time of fastening to another oil-well metal pipe 1, the box sealing surface 52 comes into contact with the pin sealing surface 42 of the pin 40 of the other oil-well metal pipe 1. More specifically, at the time of fastening, as the result of the pin 40 of the other oil-well metal pipe 1 being screwed into the box 50, the box sealing surface 52 comes into contact with the pin sealing surface 42, and as a result of the pin 40 being screwed in further, the box sealing surface 52 comes into close contact with the pin sealing surface 42. As the result of this, at the time of fastening, the box sealing surface 52 comes into close contact with the pin sealing surface 42, thereby forming a seal based on metal-metal contact. Therefore, it is possible to improve the gastightness in the mutually fastened oil-well metal pipes 1.

The box shoulder surface 53 is disposed on the pipe main body 10 side with respect to the box sealing surface 52. That is, in the box 50, the box shoulder surface 53, the box sealing surface 52 and the internal thread part 51 are disposed in that order from the center of the pipe main body 10 toward the front end of the second end portion 10B. At the time of fastening to another oil-well metal pipe 1, the box shoulder surface 53 opposes and contacts the pin shoulder surface 43 of the pin 40 of the other oil-well metal pipe 1. More specifically, at the time of fastening, as a result of the pin 40 of the other oil-well metal pipe 1 being inserted into the box 50, the box shoulder surface 53 comes into contact with the pin shoulder surface 43. As the result of this, at the time of fastening, it is possible to achieve a high torque. Further, it is possible to stabilize the positional relation between the pin 40 and the box 50 in a fastened state.

The box contact surface 500 includes at least the internal thread part 51. At the time of fastening, the internal thread part 51 of the box contact surface 500 of the box 50 corresponds to the external thread part 41 of the pin contact surface 400 of the pin 40, and comes into contact with the external thread part 41. The box sealing surface 52 corresponds to the pin sealing surface 42, and comes into contact with the pin sealing surface 42. The box shoulder surface 53 corresponds to the pin shoulder surface 43, and comes into contact with the pin shoulder surface 43.

When the pin contact surface 400 includes the external thread part 41 and does not include the pin sealing surface 42 and the pin shoulder surface 43, the box contact surface 500 includes the internal thread part 51, and does not include the box sealing surface 52 and the box shoulder surface 53. When the pin contact surface 400 includes the external thread part 41 and the pin shoulder surface 43 and does not include the pin sealing surface 42, the box contact surface 500 includes the internal thread part 51 and the box shoulder surface 53, and does not include the box sealing surface 52. When the pin contact surface 400 includes the external thread part 41 and the pin sealing surface 42 and does not include the pin shoulder surface 43, the box contact surface 500 includes the internal thread part 51 and the box sealing surface 52, and does not include the box shoulder surface 53.

The pin contact surface 400 may include a plurality of the external thread parts 41, may include a plurality of the pin sealing surfaces 42, and may include a plurality of the pin shoulder surfaces 43. For example, on the pin contact surface 400 of the pin 40, the pin shoulder surface 43, the pin sealing surface 42, the external thread part 41, the pin sealing surface 42, the pin shoulder surface 43, the pin sealing surface 42 and the external thread part 41 may be disposed in that order from the front end of the first end portion 10A toward the center of the pipe main body 10. In this case, on the box contact surface 500 of the box 50, the internal thread part 51, the box sealing surface 52, the box shoulder surface 53, the box sealing surface 52, the internal thread part 51, the box sealing surface 52 and the box shoulder surface 53 are disposed in that order from the front end of the second end portion 10B toward the center of the pipe main body 10.

FIGS. 4 and 5 illustrate a so-called premium joint in which a pin 40 includes an external thread part 41, a pin sealing surface 42, and a pin shoulder surface 43, and a box 50 includes an internal thread part 51, a box sealing surface 52, and a box shoulder surface 53. However, as described above, the pin 40 includes the external thread part 41 and needs not include the pin sealing surface 42 and the pin shoulder surface 43. In this case, the box 50 includes the internal thread part 51 and does not include the box sealing surface 52 and the box shoulder surface 53. FIG. 6 is a view illustrating one example of the oil-well metal pipe 1 in which the pin 40 includes the external thread part 41 and does not include the pin sealing surface 42 and the pin shoulder surface 43, and the box 50 includes the internal thread part 51 and does not include the box sealing surface 52 and the box shoulder surface 53.

### [When oil-well metal pipe 1 is integral type]

The oil-well metal pipe 1 illustrated in FIG. 2, FIG. 3 and FIG. 6 is a so-called T&C type oil-well metal pipe 1, in which the pipe main body 10 includes the pin tube body 11 and the coupling 12. However, the oil-well metal pipe 1 according to the present embodiment may be of an integral type instead of a T&C type.

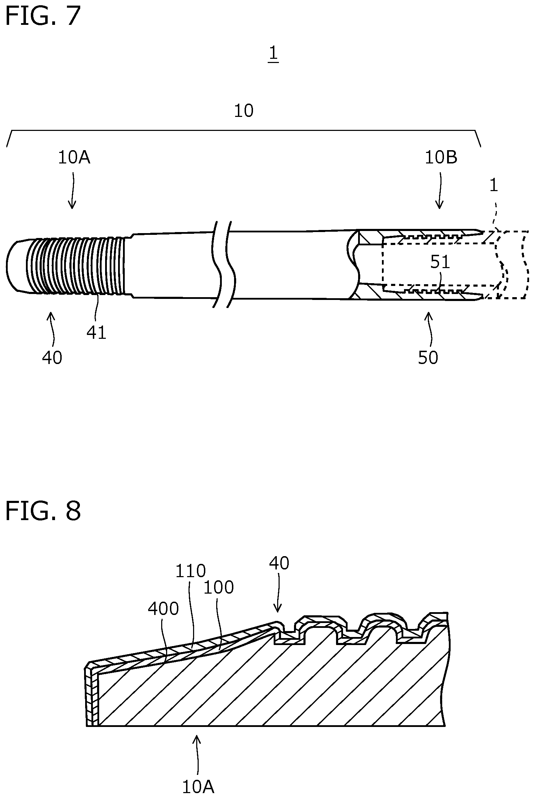

FIG. 7 is a configuration diagram illustrating an integral type oil-well metal pipe 1 according to the present embodiment. Referring to FIG. 7, the integral type oil-well metal pipe 1 includes a pipe main body 10. The pipe main body 10 includes a first end portion 10A and a second end portion 10B. The first end portion 10A is disposed on the opposite side to the second end portion 10B. As described above, in the T&C type oil-well metal pipe 1, the pipe main body 10 includes the pin tube body 11 and the coupling 12. That is, in the T&C type oil-well metal pipe 1, the pipe main body 10 is constituted by fastening two separate members (the pin tube body 11 and the coupling 12). In contrast, in the integral type oil-well metal pipe 1, the pipe main body 10 is formed in an integral manner.

The pin 40 is formed at the first end portion 10A of the pipe main body 10. At the time of fastening, the pin 40 is inserted in and screwed into the box 50 of another integral type oil-well metal pipe 1, and thereby fastened to the box 50 of the other integral type oil-well metal pipe 1. The box 50 is formed at the second end portion 10B of the pipe main body 10. At the time of fastening, the pin 40 of another integral type oil-well metal pipe 1 is inserted in and screwed into the box 50, and thereby fastened to the pin 40 of the other integral type oil-well metal pipe 1.

The structure of the pin 40 of the integral type oil-well metal pipe 1 is the same as the structure of the pin 40 of the T&C type oil-well metal pipe 1 illustrated in FIG. 4. Similarly, the structure of the box 50 of the integral type oil-well metal pipe 1 is the same as the structure of the box 50 of the T&C type oil-well metal pipe 1 illustrated in FIG. 5. Note that, in FIG. 4 and FIG. 5, the pin shoulder surface 43, the pin sealing surface 42 and the external thread part 41 are disposed in that order in the pin 40 from the front end of the first end portion 10A toward the center of the pipe main body 10. Therefore, the internal thread part 51, the box sealing surface 52 and the box shoulder surface 53 are disposed in that order in the box 50 from the front end of the second end portion 10B toward the center of the pipe main body 10. However, similarly to the pin contact surface 400 of the pin 40 of the T&C type oil-well metal pipe 1, it suffices that the pin contact surface 400 of the pin 40 of the integral type oil-well metal pipe 1 includes at least the external thread part 41. Further, similarly to the box contact surface 500 of the box 50 of the T&C type oil-well metal pipe 1, it suffices that the box contact surface 500 of the box 50 of the integral type oil-well metal pipe 1 includes at least the internal thread part 51.

In short, the oil-well metal pipe 1 of the present embodiment may be of a T&C type or may be of an integral type.

### [Chemical composition of pipe main body]

The chemical composition of the pipe main body 10 of the oil-well metal pipe 1 according to the present embodiment is not particularly limited. That is, in the present embodiment, the type of steel of the pipe main body 10 of the oil-well metal pipe 1 is not particularly limited. The pipe main body 10 may be formed of, for example, carbon steel, stainless steel, an alloy, or the like. That is, the oil-well metal pipe 1 may be a pipe made of a Fe-based alloy or an alloy pipe represented by a Ni-based alloy pipe. Here, examples of the pipe include a low-alloy pipe, a martensitic stainless steel pipe, a ferritic stainless steel pipe, an austenitic stainless steel pipe and a duplex stainless steel pipe. Examples of the alloy pipe include a Ni-based alloy pipe and a NiCrFe alloy pipe. Meanwhile, among alloy steels, Ni-based alloys and high alloy steels such as duplex stainless steels that contain alloying elements such as Cr, Ni and Mo have high corrosion resistance. Therefore using these high alloy steels as the pipe main body 10 will enable to obtain excellent corrosion resistance in a corrosive environment that contains hydrogen sulfide or carbon dioxide or the like.

### [Ni plating layer]

In the oil-well metal pipe 1 according to the present embodiment, a Ni plating layer is formed on at least one contact surface among the pin contact surface 400 and the box contact surface 500. That is, the Ni plating layer may be formed on the pin contact surface 400, and need not be formed on the box contact surface 500. Alternatively, the Ni plating layer may be formed on the box contact surface 500, and need not be formed on the pin contact surface 400. Further, the Ni plating layer may be formed on the pin contact surface 400 and on the box contact surface 500.

### [Zn-Ni alloy plating layer]

In the oil-well metal pipe 1 according to the present embodiment, a Zn-Ni alloy plating layer is formed on a Ni plating layer. That is, in a case where a Ni plating layer is formed on the pin contact surface 400, a Zn-Ni alloy plating layer is formed on the Ni plating layer that is formed on the pin contact surface 400. **In** this case, on the box contact surface 500, a Ni plating layer may be formed, a Zn-Ni alloy plating layer may be formed, or no plating layer need be formed. Further, in a case where a Ni plating layer is formed on the box contact surface 500, a Zn-Ni alloy plating layer is formed on the Ni plating layer that is formed on the box contact surface 500. In this case, on the pin contact surface 400, a Ni plating layer may be formed, a Zn-Ni alloy plating layer may be formed, or no plating layer need be formed. That is, in the present embodiment, it suffices that a Ni plating layer is formed on at least either one of the pin contact surface 400 and the box contact surface 500, and a Zn-Ni alloy plating layer is formed on the Ni plating layer.

In the following description, the structure on the pin contact surface 400 in a case where the Ni plating layer is formed on the pin contact surface 400, and the structure on the box contact surface 500 in a case where the Ni plating layer is formed on the box contact surface 500 are described.

### [Structure on pin contact surface in case where Ni plating layer is formed on pin contact surface]

FIG. 8 is a cross-sectional view of the vicinity of the pin contact surface 400 in a case where a Ni plating layer 100 is formed on the pin contact surface 400. Referring to FIG. 8, the oil-well metal pipe 1 in this case further includes the Ni plating layer 100 formed on the pin contact surface 400 of the pin 40, and a Zn-Ni alloy plating layer 110 formed on the Ni plating layer 100.

The Ni plating layer 100 and the Zn-Ni alloy plating layer 110 may be formed on one part of the pin contact surface 400 or may be formed on the entire pin contact surface 400. Note that in the final stage of fastening, the interfacial pressure increases, in particular, at the pin sealing surface 42. Therefore, in a case where the Ni plating layer 100 and the Zn-Ni alloy plating layer 110 are partially formed on the pin contact surface 400, the Ni plating layer 100 and the Zn-Ni alloy plating layer 110 are preferably formed on at least the pin sealing surface 42.

### [Structure on box contact surface in case where Ni plating layer is formed on box contact surface]

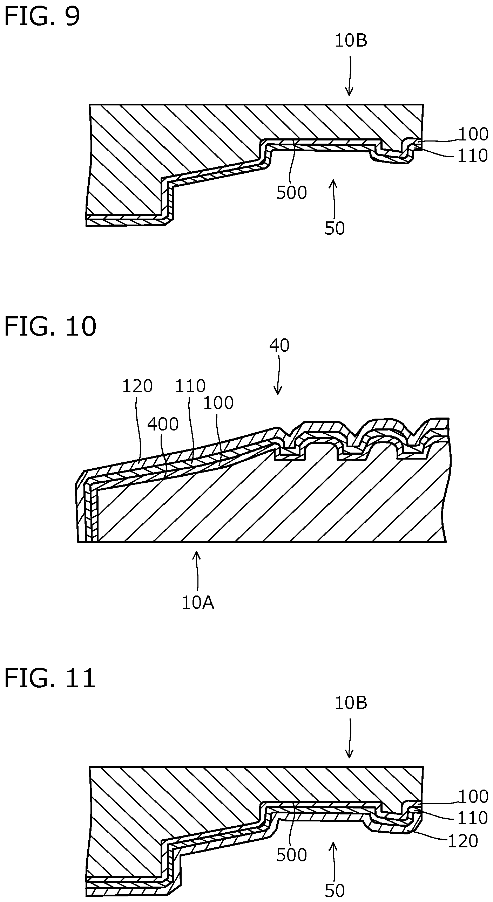

FIG. 9 is a cross-sectional view of the vicinity of the box contact surface 500 in a case where a Ni plating layer 100 is formed on the box contact surface 500. Referring to FIG. 9, the oil-well metal pipe 1 in this case further includes a Ni plating layer 100 formed on the box contact surface 500 of the box 50, and a Zn-Ni alloy plating layer 110 formed on the Ni plating layer 100.

The Ni plating layer 100 and the Zn-Ni alloy plating layer 110 may be formed on one part of the box contact surface 500 or may be formed on the entire box contact surface 500. Note that in the final stage of fastening, the interfacial pressure increases, in particular, at the box sealing surface 52. Therefore, in a case where the Ni plating layer 100 and the Zn-Ni alloy plating layer 110 are partially formed on the box contact surface 500, the Ni plating layer 100 and the Zn-Ni alloy plating layer 110 are preferably formed on at least the box sealing surface 52.

### [Deposition amounts of Ni plating layer and Zn-Ni alloy plating layer]

In the present embodiment, the deposition amount of the Ni plating layer 100 is 6.00 g/m² or more. In a case where the deposition amount of the Ni plating layer 100 is 6.00 g/m² or more, the galling resistance of the oil-well metal pipe 1 markedly increases compared to a case where the deposition amount of the Ni plating layer 100 is less than 6.00 g/m². Therefore, in the oil-well metal pipe 1 according to the present embodiment, the deposition amount of the Ni plating layer 100 formed on at least one of the pin contact surface 400 and the box contact surface 500 is set to 6.00 g/m² or more. As a result, the internal stress of the Zn-Ni alloy plating layer 110 formed on the Ni plating layer 100 is alleviated and the galling resistance of the oil-well metal pipe 1 increases.

In the present embodiment, a preferable lower limit of the deposition amount of the Ni plating layer 100 is 6.50 g/m², more preferably is 7.00 g/m², further preferably is 8.00 g/m², further preferably is 9.00 g/m², further preferably is 9.30 g/m², and further preferably is 10.00 g/m². Although an upper limit of the deposition amount of the Ni plating layer 100 is not particularly limited, for example the upper limit is 60.00 g/m².

In the present embodiment, the deposition amount of the Zn-Ni alloy plating layer 110 is not particularly limited. However, in order to obtain excellent galling resistance, there is a tendency for the Zn-Ni alloy plating layer 110 formed on the oil-well metal pipe 1 to be formed comparatively thickly. Specifically, the deposition amount of the Zn-Ni alloy plating layer 110 according to the present embodiment is for example, 20 to 160 g/m². Whilst the Zn-Ni alloy plating layer 110 that is formed to a thickness of such a degree exhibits excellent wear resistance, on the other hand the internal stress thereof is liable to become high. Therefore, it is considered that by forming the Ni plating layer 100 having a deposition amount of 6.00 g/m² or more as an underlayer, the internal stress of the Zn-Ni alloy plating layer 110 is alleviated, and as a result the galling resistance of the oil-well metal pipe 1 increases.

The deposition amount of the Ni plating layer 100 and Zn-Ni alloy plating layer can be determined using a film dissolution process. Specifically, a sample including the Ni plating layer 100 and the Zn-Ni alloy plating layer 110 (including a contact surface on which the Ni plating layer 100 and the Zn-Ni alloy plating layer 110 have been formed) is taken from the oil-well metal pipe 1. The areas of the Ni plating layer 100 and the Zn-Ni alloy plating layer 110 formed on the obtained sample are measured in advance. A dilute hydrochloric acid solution is used to dissolve the Zn-Ni alloy plating layer 110 of the obtained sample, to thereby obtain a liquid solution of the Zn-Ni alloy plating layer 110. Thereafter, a dilute nitric acid solution is used to dissolve the Ni plating layer 100 of the obtained sample from which the Zn-Ni alloy plating layer 110 had been removed by dissolving, to thereby obtain a liquid solution of the Ni plating layer 100.

Each of the obtained liquid solutions is subjected to elemental analysis by Inductively Coupled Plasma Atomic Emission Spectrometry (ICP-AES). The deposition amount (g/m²) of the Ni plating layer 100 can be determined using the Ni content obtained as a result of the elemental analysis performed with respect to the Ni plating layer 100 and the area of the Ni plating layer 100 that had been formed on the sample. The deposition amount (g/m²) of the Zn-Ni alloy plating layer 110 can be determined using the Ni content and Zn content obtained as a result of the elemental analysis performed with respect to the Zn-Ni alloy plating layer 110 and the area of the Zn-Ni alloy plating layer 110 that had been formed on the sample.

### [Chemical compositions of Ni plating layer and Zn-Ni alloy plating layer]

The Ni plating layer 100 has a chemical composition consisting of Ni and impurities. The Zn-Ni alloy plating layer 110 is constituted by a Zn-Ni alloy and has a chemical composition consisting of Ni: 5 to 25%, and the balance: Zn and impurities. Here, the "impurities" in the chemical composition of the Ni plating layer mean substances other than Ni that are contained in the Ni plating layer 100 due to the production process and the like of the oil-well metal pipe 1, and whose contents are within a range that does not influence the effects of the oil-well metal pipe 1 according to the present embodiment. In addition, the "impurities" in the chemical composition of the Zn-Ni alloy plating layer 110 mean substances other than Zn and Ni that are contained in the Zn-Ni alloy plating layer 110 due to the production process and the like of the oil-well metal pipe 1, and whose contents are within a range that does not influence the effects of the oil-well metal pipe 1 according to the present embodiment.

Here, the Zn-Ni alloy plating layer 110 contains Zn. Zn is a base metal in comparison to Fe. Therefore, the Zn-Ni alloy plating layer 110 is corroded with priority relative to the steel material (sacrificial protection). By this means, the corrosion resistance property of the oil-well metal pipe 1 is improved. Note that, when determining the deposition amounts by the aforementioned film dissolution process, the chemical compositions of the Ni plating layer 100 and the Zn-Ni alloy plating layer 110 can be identified at the same time.

### [Other optional structures of oil-well metal pipe 1 of present embodiment]

### [Chemical conversion treatment layer]

The oil-well metal pipe 1 of the present embodiment may further include a chemical conversion treatment layer on the Zn-Ni alloy plating layer 110. For example, in a case where the Ni plating layer 100 and the Zn-Ni alloy plating layer 110 are formed on the pin contact surface 400, a chemical conversion treatment layer may be formed on the Zn-Ni alloy plating layer 110. Further, in a case where the Ni plating layer 100 and the Zn-Ni alloy plating layer 110 are formed on the box contact surface 500, a chemical conversion treatment layer may be formed on the Zn-Ni alloy plating layer 110.

The chemical conversion treatment layer is not particularly limited, and may be a well-known chemical conversion treatment layer. The chemical conversion treatment layer for example, may be an oxalate chemical conversion treatment layer, may be a phosphate chemical conversion treatment layer, may be a borate chemical conversion treatment layer, or may be a chromate coating. In a case where the chemical conversion treatment layer is a chromate coating, preferably the chromate coating does not contain hexavalent chromium.

In some cases the oil-well metal pipe 1 will be stored outdoors for a long period of time until actually being used at an oil drilling site. In a case where the oil-well metal pipe 1 is exposed to the atmosphere for a long period of time outdoors, the chemical conversion treatment layer enhances the corrosion resistance of the pin contact surface 400, and can suppress the occurrence of rust (white rust) on the pin contact surface 400. The thickness of the chemical conversion treatment layer is not particularly limited. The thickness of the chemical conversion treatment layer is, for example, within the range of 10 to 200 nm.

### [Lubricant coating layer]

The oil-well metal pipe 1 may further include a lubricant coating layer on the Zn-Ni alloy plating layer 110, on the chemical conversion treatment layer, or on a contact surface on which the Zn-Ni alloy plating layer 110 is not formed (on the pin contact surface 400 or on the box contact surface 500). The lubricant coating layer further enhances the lubricity of the oil-well metal pipe 1. Referring to FIG. 10, in a case where the Ni plating layer 100 and the Zn-Ni alloy plating layer 110 are formed on the pin contact surface 400, a lubricant coating layer 120 may be formed on the Zn-Ni alloy plating layer 110. Further, referring to FIG. 11, in a case where the Ni plating layer 100 and the Zn-Ni alloy plating layer 110 are formed on the box contact surface 500, a lubricant coating layer 120 may be formed on the Zn-Ni alloy plating layer 110.

The lubricant coating layer 120 may be solid, or may be in a semi-solid state or a liquid state. The lubricant coating layer 120 can be formed using a commercially available lubricant. The lubricant coating layer 120 contains, for example, lubricating particles and a binder. As necessary, the lubricant coating layer 120 may also contain a solvent and other components.

The lubricating particles are not particularly limited as long as they are particles having lubricity. The lubricating particles are, for example, one or more types selected from the group consisting of particles of graphite, MoS₂ (molybdenum disulfide), WS₂ (tungsten disulfide), BN (boron nitride), PTFE (polytetrafluoroethylene), CFx (graphite fluoride), and CaCO₃ (calcium carbonate).

The binder, for example, is one or two types selected from the group consisting of an organic binder and an inorganic binder. The organic binder is, for example, one or two types selected from the group consisting of a thermosetting resin and a thermoplastic resin. The thermosetting resin, for example, is one or more types selected from the group consisting of polyethylene resin, polyimide resin and polyamide-imide resin. The inorganic binder, for example, is one or two types selected from the group consisting of compounds containing alkoxysilane and siloxane bonds.

The commercially available lubricant is, for example, Seal-Guard ECF (trade name) manufactured by Jet-Lube LLC. Other examples of the lubricant coating layer 120 include a lubricant coating layer 120 containing rosin, metallic soap, wax and a lubricant powder.

### [Method for producing oil-well metal pipe 1]

A method for producing the oil-well metal pipe 1 according to the present embodiment is described hereunder. Note that as long as the oil-well metal pipe 1 of the present embodiment has the structure described above, a method for producing the oil-well metal pipe 1 is not limited to the following production method. However, the production method described hereunder is one favorable example for producing the oil-well metal pipe 1 according to the present embodiment.

The method for producing the oil-well metal pipe 1 includes a preparation process (S1) of preparing a hollow shell in which the pin 40 or the box 50 is formed, a Ni plating layer formation process (S2), and a Zn-Ni alloy plating layer formation process (S3). Hereunder, each process of the method for producing the oil-well metal pipe 1 of the present embodiment is described in detail.

### [Preparation process (S1)]

In the preparation process (S1), a hollow shell in which the pin 40 or the box 50 is formed is prepared. In the present description, the phrase "hollow shell in which the pin or the box is formed" means either of the pipe main body 10 and the pin tube body 11 in a T&C type oil-well metal pipe 1 and the pipe main body 10 in the integral type oil-well metal pipe 1.

The hollow shell in which the pin 40 or the box 50 is formed is produced, for example, by the following method. A starting material is produced using molten steel. Specifically, a cast piece (a slab, bloom or billet) is produced by a continuous casting process using the molten steel. An ingot may also be produced by an ingotmaking process using the molten steel. As necessary, the slab, bloom or ingot may be subjected to blooming to produce a billet. The starting material (a slab, bloom or billet) is produced by the above described process. The prepared starting material is subjected to hot working to produce a hollow shell. The hot working method may be piercing-rolling by means of the Mannesmann process, or may be a hot-extrusion process. The hollow shell after hot working is subjected to well-known quenching and well-known tempering to adjust the strength of the hollow shell. A hollow shell is produced by the above process. Note that in a case where the oil-well metal pipe 1 is the T&C type, a hollow shell for the coupling 12 is also prepared. The method for producing the hollow shell for the coupling 12 is the same as the method for producing the hollow shell described above.

In a case where the oil-well metal pipe 1 is the T&C type, threading is performed with respect to the outer surface of both end portions of the hollow shell for the pin tube body 11, to form the pin 40 that includes the pin contact surface 400. By means of the above process, a hollow shell (the pin tube body 11) in which the pin 40 is formed is prepared for a case where the oil-well metal pipe 1 is the T&C type. Note that in a case where the oil-well metal pipe 1 is the T&C type, the coupling 12 may also be prepared. Specifically, threading is performed with respect to the inner surface of both end portions of the hollow shell for the coupling 12, to form the box 50 that includes the box contact surface 500. The coupling 12 is produced by the above process.

In a case where the oil-well metal pipe 1 is the integral type, threading is performed on the outer surface of the first end portion 10A of the hollow shell to form the pin 40 that includes the pin contact surface 400. In addition, threading is performed with respect to the inner surface of the second end portion 10B of the hollow shell to form the box 50 that includes the box contact surface 500. By means of the above process, in a case where the oil-well metal pipe 1 is the integral type, a hollow shell (pipe main body 10) in which the pin 40 and the box 50 are formed is prepared.

### [Other optional process]

The preparation process (S1) of the present embodiment may further include a grinding process.

In the case of performing a grinding process in the preparation process (S1) according to the present embodiment, for example, sandblasting treatment, and finishing by machine grinding are performed in the grinding process. The sandblasting treatment is a treatment in which a blast material (abrasive) is mixed with compressed air and the mixture is propelled onto the contact surface. Examples of the blast material include spherical shot material and angular grit material. The surface roughness of the contact surface can be increased by the sandblasting treatment. The sandblasting treatment can be carried out by a well-known method. For example, air is compressed by a compressor, and the blast material is mixed with the compressed air. The blast material may be composed of, for example, stainless steel, aluminum, ceramic material, or alumina. The sandblasting treatment conditions such as the propelling speed are not particularly limited, and can be appropriately adjusted according to well-known conditions.

### [Ni plating layer formation process (S2)]

In the Ni plating layer formation process (S2), the Ni plating layer 100 is formed by electroplating on the pin contact surface 400 of the hollow shell in which the pin 40 is formed and/or on the box contact surface 500 of the hollow shell in which the box 50 is formed, after the preparation process (S1).

In the Ni plating layer formation process (S2), the Ni plating layer 100 is formed by electroplating using a plating bath containing nickel ions. The counter anions to the nickel ions are not particularly limited. For example, as counter anions to the nickel ions, chloride ions may be used, sulfate ions may be used, or sulfamate ions may be used. That is, in the Ni plating layer formation process (S2) according to the present embodiment, a chloride bath, a sulfate bath, or a sulfamic acid bath may be used as the plating bath.

Hereunder, specifically, a case of using a chloride bath as one example of the plating bath will be described. When using a chloride bath, for example, a chloride bath that contains nickel chloride: 240 g/L and hydrochloric acid: 125 mL/L can be used. Note that, as described above, in the Ni plating layer formation process (S2) according to the present embodiment, the plating bath is not limited to a chloride bath, and another bath can also be used.

The conditions of the electroplating in the Ni plating layer formation process (S2) are not particularly limited, and well-known conditions can be appropriately adjusted. Specifically, as the electroplating conditions, conditions of a plating bath pH of 1 to 10, a plating bath temperature of 10 to 60°C, a current density of 1 to 100 A/dm², and a treatment time of 6.0 to 1800.0 secs can be adopted. Note that, as described above, the deposition amount of the Ni plating layer 100 according to the present embodiment is 6.00 g/m² or more. When performing electroplating, the deposition amount of the Ni plating layer 100 can be adjusted by adjusting the current density and treatment time of the electroplating. That is, it suffices to appropriately adjust the current density and treatment time of the electroplating in accordance with the type of plating bath that is used and conditions of the electroplating such as the temperature of the plating bath so as to adjust the deposition amount of the Ni plating layer 100 to 6.00 g/m² or more.

### [Zn-Ni alloy plating layer formation process (S3)]

In the Zn-Ni alloy plating layer formation process (S3), after the Ni plating layer formation process (S2), the Zn-Ni alloy plating layer 110 is formed by electroplating on the Ni plating layer 100. Note that, as described above, the Zn-Ni alloy plating layer 110 may be formed on the pin contact surface 400 or on the box contact surface 500 on which the Ni plating layer 100 is not formed.

In the Zn-Ni alloy plating layer formation process (S3), the Zn-Ni alloy plating layer 110 is formed by electroplating using a well-known plating bath containing zinc ions and nickel ions. For example, a plating bath containing zinc ions: 1 to 100 g/L and nickel ions: 1 to 100 g/L can be used. Further, the counter anions to the zinc ions and nickel ions are not particularly limited. For example, as counter anions, chloride ions may be used or sulfate ions may be used. That is, in the Zn-Ni alloy plating layer formation process (S3) according to the present embodiment, a chloride bath or a sulfate bath may be used as the plating bath.

The conditions of the electroplating in the Zn-Ni alloy plating layer formation process (S3) are not particularly limited, and well-known conditions can be appropriately adjusted. The electroplating conditions are, for example, a plating bath pH of 1 to 10, a plating bath temperature of 10 to 60°C, a current density of 1 to 100 A/dm², and a treatment time of 0.1 to 30 minutes. In the case of forming the Zn-Ni alloy plating layer 110 on the Ni plating layer 100 formed on the pin contact surface 400, the pin contact surface 400 is immersed in the aforementioned plating bath and electroplating is performed. Similarly, in the case of forming the Zn-Ni alloy plating layer 110 on the Ni plating layer 100 formed on the box contact surface 500, the box contact surface 500 is immersed in the aforementioned plating bath and electroplating is performed.

The oil-well metal pipe 1 of the present embodiment having the structure described above is produced by the production processes described above. Note that the aforementioned production processes are one example of production processes for producing the oil-well metal pipe 1 according to the present embodiment, and a method for producing the oil-well metal pipe 1 according to the present embodiment is not limited to the production method described above.

### [Other optional processes]

In the method for producing the oil-well metal pipe 1 according to the present embodiment, at least one process among the following chemical conversion treatment process and film formation process may also be performed. These processes are optional processes. Accordingly, these processes need not be performed.

### [Chemical conversion treatment process]

In the production method of the present embodiment, as necessary, a chemical conversion treatment process may be performed. That is, the chemical conversion treatment process is an optional process. In the case of performing a chemical conversion treatment process, a chemical conversion treatment layer is formed on the Zn-Ni alloy plating layer 110. In the chemical conversion treatment process, it suffices to perform a well-known chemical conversion treatment. The chemical conversion treatment, for example, may be an oxalate chemical conversion treatment, may be a phosphate chemical conversion treatment, or may be a borate chemical conversion treatment. For example, in the case of performing a phosphate chemical conversion treatment, a chemical conversion treatment that uses zinc phosphate may be performed, a chemical conversion treatment that uses manganese phosphate may be performed, or a chemical conversion treatment that uses calcium zinc phosphate may be performed.

Specifically, in the case of performing a zinc phosphate chemical conversion treatment, as a treatment solution, for example, a chemical conversion treatment solution containing 1 to 150 g/L of phosphate ions, 3 to 70 g/L of zinc ions, 1 to 100 g/L of nitrate ions, and 0 to 30 g/L of nickel ions can be used. In this case, the temperature of the chemical conversion treatment solution is for example, 20 to 100°C. The chemical conversion treatment layer can be formed by appropriately setting well-known conditions and performing a chemical conversion treatment in this way.

### [Film formation process]

In the production method of the present embodiment, as necessary, a film formation process may be performed. That is, the film formation process is an optional process. In the film formation process, a lubricant coating layer 120 is formed on the Zn-Ni alloy plating layer 110 and/or on a contact surface (pin contact surface 400 or box contact surface 500) on which the Zn-Ni alloy plating layer 110 is not formed.

In the film formation process, a lubricant or a composition containing the components of the aforementioned lubricant coating is applied. In this way, the lubricant coating layer 120 can be formed. The application method is not particularly limited. Examples of the application method include spray coating, brushing, and immersion. When adopting spray coating as the application method, the composition or lubricant may be heated and then sprayed in a state in which the flowability has been increased. The composition or lubricant is then dried to form the lubricant coating layer 120.

The oil-well metal pipe 1 of the present embodiment is described more specifically hereunder by way of examples. The conditions adopted in the following examples are one example of conditions which are employed for confirming the workability and advantageous effects of the oil-well metal pipe 1 of the present embodiment. Accordingly, the oil-well metal pipe 1 of the present embodiment is not limited to this one example of the conditions.

### EXAMPLES

In the present examples, a Ni plating layer and a Zn-Ni alloy plating layer were formed on steel plates simulating a contact surface, and the galling resistance of the respective steel plates was evaluated. Specifically, the steel plates were cold rolled steel plates, and the chemical composition was: C ≤ 0.15%, Mn ≤ 0.60%, P ≤ 0.100%, S ≤ 0.050%, and the balance: Fe and impurities.

As a preconditioning treatment, the steel plate of each test number was subjected to electrolytic degreasing and immersion pickling. After the preconditioning treatment, a Ni plating layer was formed on the steel plate of each test number using a plating bath described in Table 1, and under conditions of a current density (A/dm²) and a treatment time (secs) that are described in Table 1. Note that the symbol "-" in the "Plating Bath" column, "Current Density" column, and "Treatment Time" column in Table 1 means that a Ni plating layer was not formed.

### [Table 1]

**TABLE 1**

| Test Number | Plating Bath | Current Density (A/dm²) | Treatment Time (secs) | Ni Plating Layer Deposition Amount (g/m²) | Sliding Distance (mm) |
|---|---|---|---|---|---|
| 1 | - | - | - | 0 | 6,384 |
| 2 | A | 5 | 30.0 | 0.17 | 6,710 |
| 3 | A | 6 | 180.0 | 3.85 | 6,937 |
| 4 | A | 5 | 180.0 | 4.24 | 7,741 |
| 5 | A | 10 | 180.0 | 6.87 | 10,355 |
| 6 | A | 15 | 180.0 | 9.39 | 13,371 |
| 7 | B | 4 | 75.0 | 8.68 | 9,877 |
| 8 | B | 4 | 230.0 | 14.53 | 14,376 |
| 9 | B | 4 | 380.0 | 42.37 | 13,220 |

Specifically, plating baths "A" and "B" were as described hereunder.

### [Plating bath A]

A chloride bath was used as plating bath A. Plating bath A contained nickel chloride in an amount of 240 g/L, and contained hydrochloric acid in an amount of 125 mL/L. Note that the electroplating conditions in the case of using plating bath A were a plating bath pH of 1.5 or less, and a plating bath temperature of 25°C.

### [Plating bath B]

A sulfate bath was used as plating bath B. Plating bath B contained nickel sulfate in an amount of 240 to 300 g/L, nickel chloride in an amount of 40 to 70 g/L, and boric acid in an amount of 30 to 45 g/L. Note that the electroplating conditions in the case of using plating bath B were a plating bath pH of 3 to 4, and a plating bath temperature of 40 to 50°C.

Each steel plate after formation of the Ni plating layer was subjected to a Zn-Ni alloy plating layer formation process. A well-known plating bath that is commercially available was used as the plating bath for the Zn-Ni alloy plating layer formation process. The aforementioned preferable conditions were adopted as the other conditions of the Zn-Ni alloy plating layer formation process. A steel plate of each test number was produced by the production process described above.

The produced steel plate of each test number was subjected to measurement of the plating deposition amounts, and a galling resistance test.

### [Plating deposition amount measurement]

The deposition amount of the Ni plating layer and the deposition amount of the Zn-Ni alloy plating layer of the steel plate of each test number were measured by the aforementioned film dissolution process. Specifically, a sample including the Ni plating layer and the Zn-Ni alloy plating layer was taken from the steel plate of each test number, and the Zn-Ni alloy plating layer and the Ni plating layer were dissolved using a dilute hydrochloric acid solution and a dilute nitric acid solution, respectively. Each of the obtained liquid solutions was subjected to elemental analysis by ICP-AES. The deposition amount (g/m²) of the Ni plating layer was determined using the obtained Ni content, and the area of the Ni plating layer that had been formed on the sample. The determined deposition amount of the Ni plating layer is shown in Table 1. Similarly, the deposition amount (g/m²) of the Zn-Ni alloy plating layer was determined using the obtained Ni content and Zn content, and the area of the Zn-Ni alloy plating layer that had been formed on the sample. In the present examples, the deposition amount of the Zn-Ni alloy plating layer was 80 g/m² for each test number.

### [Galling resistance test]

A lubricant coating layer was formed on the Zn-Ni alloy plating layer of the steel plate of each test number, and thereafter the steel plate of each test number was subjected to a galling resistance test. Specifically, a commercially available solid lubricant coating layer was formed on the Zn-Ni alloy plating layer of the steel plate of each test number. The thickness of the formed solid lubricant coating layer was 30 µm for each test number. The steel plate of each test number was affixed onto a rotary disk, and the rotary disk was rotated under a sliding condition of a sliding speed of 31.4 mm/s while a steel ball remained pressed against the rotary disk with a force of 60 N (Hertz contact pressure: 1.25 GPa). The rotary disk was rotated with a reciprocating oscillation of 90 degrees. Note that, the sliding was performed without lubrication at room temperature. The coefficient of friction µ of the steel ball during sliding was measured, and the sliding distance (mm) until the coefficient of friction µ became more than 0.3 was determined. The determined sliding distances are shown in Table 1.

### [Evaluation results]

Referring to Table 1, in the steel plates of Test Numbers 5 to 9 the deposition amount of the Ni plating layer was 6.00 g/m² or more. As a result, the sliding distance in the galling resistance test was 9000 mm or more. That is, the steel plates of Test Numbers 5 to 9 had excellent galling resistance.

On the other hand, in the steel plates of Test Numbers 1 to 4 the deposition amount of the Ni plating layer was less than 6.00 g/m². As a result, the sliding distance in the galling resistance test was less than 9000 mm. That is, the steel plates of Test Numbers 1 to 4 did not have excellent galling resistance.

So far, the embodiments of the present disclosure have been described. However, the embodiments described above are merely examples for carrying out the present disclosure. Therefore, the present disclosure is not limited to the embodiments described above, and the embodiments described above can be appropriately modified and practiced within a range not departing from the spirit of the present disclosure.

### REFERENCE SIGNS LIST

- 1: Oil-well metal pipe
- 10: Pipe main body
- 10A: First end portion
- 10B: Second end portion
- 40: Pin
- 41: External thread part
- 50: Box
- 51: Internal thread part
- 100: Ni plating layer
- 110: Zn-Ni alloy plating layer
- 120: Lubricant coating layer
- 400: Pin contact surface
- 500: Box contact surface

## Claims

1. An oil-well metal pipe comprising:
a pipe main body including a first end portion and a second end portion,
the pipe main body including:
a pin formed at the first end portion; and
a box formed at the second end portion,
wherein:
the pin includes a pin contact surface including an external thread part; and
the box includes a box contact surface including an internal thread part;
the oil-well metal pipe further comprising:
a Ni plating layer formed on at least one of the pin contact surface and the box contact surface, and
a Zn-Ni alloy plating layer formed on the Ni plating layer;
wherein:
a deposition amount of the Ni plating layer is 6.00 g/m² or more.

2. The oil-well metal pipe according to claim 1, further comprising:
a lubricant coating layer on or above the Zn-Ni alloy plating layer.
